# DEMANDE DE BREVET EUROPEEN

(11) **EP 0 540 399 A1**
(43) Date de publication de la demande: **05.05.1993**
(21) Numéro de dépôt: 92402859.0
(22) Date de dépôt: 20.10.1992
(51) Int. Cl.: H04N 1/04

(54) **Télécopieur thermique**

(30) Priorité: 28.10.1991 FR 9113254
(71) Demandeur: SOCIETE D'APPLICATIONS GENERALES D'ELECTRICITE ET DE MECANIQUE SAGEM, F-75783 Paris Cédex 16 (FR)
(72) Inventeur: Kuhn, Alex, F-95430 Auvers Sur Oise (FR)
(74) Mandataire: Bloch, Gérard

(57) **Abrégé**

Le télécopieur comporte une tête thermique d'écriture et de réception, comportant un radiateur support d'une plaquette de céramique (6) portant un ensemble d'écriture (7), et une tête d'analyse et d'émission, comportant un boîtier de lumière (1) contenant intérieurement une source de lumière (5) et un photodétecteur (3) . Le boîtier (1) est un radiateur et il supporte extérieurement la plaquette de céramique (6), pour former une tête unique d'écriture et d'analyse (20).

L'encombrement du télécopieur est réduit.

## Description

La présente invention concerne un télécopieur thermique comprenant une tête thermique d'écriture d'un document papier à recevoir et une tête d'analyse d'un document papier à émettre.

La tête d'écriture est donc utilisée en réception, la tête d'analyse en émission, les deux têtes pouvant être aussi utilisées simultanément quand on fait fonctionner le télécopieur en mode dit copie locale.

Dans les télécopieurs actuellement sur le marché, la tête d'écriture comporte un ensemble d'éléments résistifs et leurs conducteurs sur une plaquette de céramique fixée sur un support radiateur. La tête d'analyse, aussi désignée CIS (contact image sensor), comporte une source de lumière, pour éclairer le document à émettre, un détecteur photosensible, ou photodétecteur, et éventuellement un guide de lumière, le tout disposé dans un boîtier support fermé par une vitre contre laquelle peut être plaqué un document papier à émettre. Si le détecteur est disposé à proximité de la vitre, sans guide de lumière intermédiaire, on parle d'une tête à contact total (full contact). Dans le cas contraire, avec interposition d'un guide entre le détecteur et la vitre, il s'agit d'une tête d'analyse classique.

La réalisation de ces télécopieurs de l'art antérieur se heurte à des difficultés d'implantation de composants et de connectique ; leur contrôle et leur test sont de mise en oeuvre relativement lourde.

L'invention de la présente demande vise à éliminer ces difficultés.

A cet effet, elle concerne un télécopieur thermique, à tête thermique d'écriture et de réception, comportant un radiateur support d'une plaquette de céramique portant un ensemble d'écriture, et à tête d'analyse et d'émission, comportant un boîtier de lumière contenant intérieurement une source de lumière et un photodétecteur, caractérisé par le fait que ledit boîtier est un radiateur et qu'il supporte extérieurement la plaquette de céramique, pour former une tête unique d'écriture et d'analyse.

Dans le télécopieur de l'invention, les fonctions d'écriture et d'analyse sont donc regroupées sur un seul et même composant. Ce regroupement fonctionnel entraîne une réduction d'encombrement et de coût ainsi qu'une simplification de la connectique.

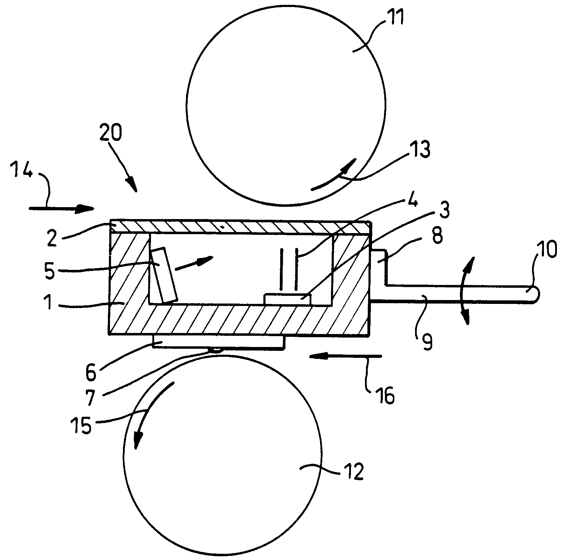

L'invention sera mieux comprise à l'aide de la description suivante de la tête unique d'écriture et d'analyse du télécopieur, en référence à la figure unique qui la représente partiellement en coupe.

Du télécopieur thermique de l'invention n'est donc essentiellement décrit ci-après que son composant d'écriture-analyse, ses autres composants étant parfaitement connus de l'homme de métier.

La tête 20 comporte un boîtier radiateur 1, de forme générale parallélépipédique, fermé par une vitre 2. A l'intérieur, sont disposés, et connus en soi, un photodétecteur 3, un guide de lumière 4, entre la vitre et le photodétecteur, et une source de lumière 5, pour éclairer la zone du boîtier comprise entre la vitre et le guide de lumière. A l'extérieur du boîtier 1 est fixée une plaquette de céramique 6 portant un ensemble d'écriture 7, avec des éléments résistifs destinés à être parcourus par un courant de chauffage et d'impression, et leurs conducteurs.

On ne décrira pas la connectique associée à l'ensemble d'écriture 7, au photodétecteur 3 et à la source 5. Elle est bien connue de l'homme de métier, avec ses circuits imprimés et/ou films souples de liaison et connecteurs.

Le boîtier 1 est fixé à une extrémité 8 d'un bras 9 monté pivotant à son autre extrémité 10.

Ainsi, la tête 20 peut être entraînée soit contre un rouleau d'appui d'analyse 11, par sa vitre 2, soit contre un rouleau d'appui d'écriture 12, par l'ensemble d'écriture 7.

Le rouleau d'analyse 11 est monté rotatif dans le sens de la flèche 13 pour entraîner un document papier, à émettre, dans le sens de la flèche 14, entre le rouleau 11 et la vitre 2. Le document papier reçoit alors, à travers la vitre 2, la lumière émise par la source 5 qu'il renvoie, à travers la vitre 2 et le guide 4, sur le photodétecteur 3.

Le rouleau d'écriture 12 est monté rotatif dans le sens de la flèche 15 pour entrainer un document papier, à recevoir, dans le sens de la flèche 16, entre le rouleau 12 et l'ensemble d'écriture 7.

## Revendications

1. Télécopieur thermique, à tête thermique d'écriture et de réception, comportant un radiateur support d'une plaquette de céramique (6) portant un ensemble d'écriture (7), et à tête d'analyse et d'émission, comportant un boîtier de lumière (1) contenant intérieurement une source de lumière (5) et un photodétecteur (3), caractérisé par le fait que ledit boîtier (1) est un radiateur et qu'il supporte extérieurement la plaquette de céramique (6), pour former une tête unique d'écriture et d'analyse (20).
